(19) **Europäisches Patentamt / European Patent Office / Office européen des brevets**

(11) **EP 2 116 879 B1**

(12) **EUROPEAN PATENT SPECIFICATION**

(45) Date of publication and mention
of the grant of the patent:
**04.04.2018  Bulletin 2018/14**

(51) Int Cl.:
*G02B 6/32* *(2006.01)*          *G02B 6/42* *(2006.01)*
*G02B 6/43* *(2006.01)*

(21) Application number: **09157789.0**

(22) Date of filing: **09.04.2009**

(54) **Optical interface**

Optische Schnittstelle

Interface optique

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **10.04.2008  US 43940 P**

(43) Date of publication of application:
**11.11.2009  Bulletin 2009/46**

(73) Proprietor: **Tyco Electronics Nederland B.V.
5222 AR 's-Hertogenbosch (NL)**

(72) Inventors:
• **van Geffen, Sjoerd Geert Cornelis
5467 BP, Veghel (NL)**

• **Duis, Jeroen
6942TL, Didam (NL)**

(74) Representative: **Johnstone, Douglas Ian et al
Baron Warren Redfern
1000 Great West Road
Brentford TW8 9DW (GB)**

(56) References cited:
**EP-A1- 1 109 041          US-A- 5 515 468
US-A1- 2003 215 234          US-B1- 6 307 197
US-B1- 6 956 995**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

**FIELD OF INVENTION**

The invention relates generally to interconnecting optical components, and, more specifically, to a low-profile, interface having folded optics for optically coupling two optical components.

**BACKGROUND OF INVENTION**

In the field of multimedia devices, new applications emerge continuously. For example, in mobile phones, displays tend to get larger while the overall envelope of the handheld device is being reduced. To facilitate these design objectives, complex hinge configurations are being developed to connect the display portion of the device to the keypad portion. Devices having a display that is separate from and hinged to a host module (e.g. keypad module containing the host processor) are referred to herein as "hinged-display devices."

Not only are these devices decreasing in form factor, but also the resolution of their display is increasing. For example, breakthrough technologies in high resolution displays enable value-added services such as video-on-demand and TV broadcasting. Multi mega-pixel cameras allow for image capturing and video conferencing. GPS systems are integrated in mobile phones providing real-time detailed geographical information onto the display. Visible lasers are applied for mobile projectors scaling high resolution content to the size of an A4-sheet of paper.

These applications require a large amount of data to be transmitted throughout the different modules of the handheld device. Moreover, future mobile device architectures might evolve into a modular set of sub-systems that are not necessarily permanently joined together, allowing the end-user to take only those modules with him that he expects to need during the planned activity. In any case, there is a need for a link enabling communications between all relevant individual sub-systems.

The increased bandwidth requirements stretch the limits of the flexible parallel interconnect solutions that are typically used in mobile phones such as Micro Coax and FPC (Flat Printed Circuits). Maximum data speeds reach ~1 Gigabit per second per differential lane with short flexible interconnections and reasonable impedance match through the entire interconnected system. This maximum is the result of a trade-off between keeping the cross-sectional area of the conductors large enough to allow for the required bandwidth, but small enough to maintain mechanical flexibility for cable routing. Moreover, the transmission media needs to be mechanically durable with respect to repetitive bending and twisting of the cable assembly during the life of the hinged-display device. To keep up with the ever-increasing aggregated speed requirements of emerging mobile phone applications and services outlined above, the number of parallel transmission lines at the physical layer between host processor and display module are reaching the limits of what can fit through the hinge. Consequently, there is a trend to replace parallel interconnect technology with serial links in handheld devices.

The MIPI (Mobile Industry Processor Interface) Alliance is an open membership organization that includes companies in the mobile industry that share the objective of defining and promoting open specifications for interfaces in mobile terminals. As such, MIPI is establishing an electrical specification for a physical layer (M-PHY), enabling serial gigabit transmission while accounting for the power dissipation levels appropriate for battery-operated handheld devices. The interconnect itself is considered to be a black-box. That is, as long as the electrical inputs and outputs at both ends of the interconnect comply with the M-PHY specification it will be up to the manufacturer to define a transmission medium.

Beside the physical bandwidth limitations of flexible interconnections, electrical conductors may be prone to Electromagnetic Interference (EMI) caused by RF-sources such as GSM and Bluetooth® devices. Moreover, the radiation as generated by the conductor itself may cause noise issues in one of the antennas in the handheld device. Therefore, for higher transmission speeds, optical interconnects may become an effective solution.

Optical interconnects face, however, other challenges in hinged-display device applications. Of particular interested herein is achieving acceptable optical performance given the stack-height limitations imposed on these devices. By way of background, an interconnection needs to optically couple an active device, such as a transmitter or receiver, with a fiber. The transmitter device is typically based on a surface emitting VCSEL chip owing to cost considerations. The receiver is typically based on a photodiode with a relatively large effective area, parallel to the substrate or printed circuit board, making it insensitive with respect to lateral misalignments and therefore subject to passive alignment. Since both active surfaces are parallel to the substrate on which they are mounted, the interconnection requires an interface to bend the light at 90 degrees. The interface between the active device and optical fiber comprises light bending optics to couple the light perpendicularly from VCSEL to fiber and eventually onto the photodiode. By using transparent plastics for injection molding, one is able to create optical features into a single connecting interface between active device and optical fiber. (Examples of light bending interfaces are disclosed in US Patents Nos. 5,515,468 and 6,913,400).

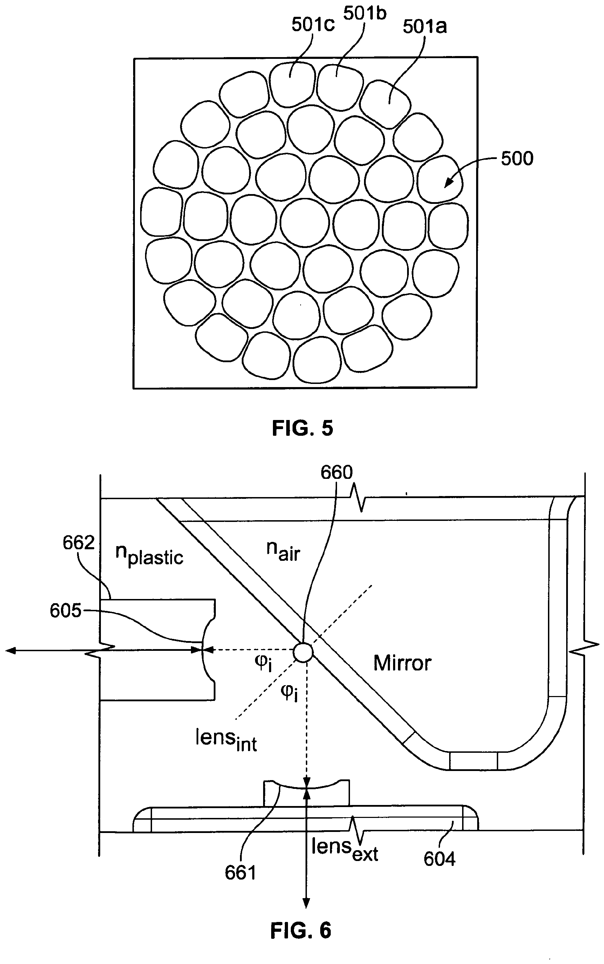

The concept of using molded optics to bend the light in the connector is represented by the schematic of Fig. 6. As long as the angle of incidence of each ray of light hitting the angled surface is greater than the critical angle constraint by the difference in refractive index of the molded material (nplastic) and the medium filling the cavity (nair) the light will be totally reflected. That is, there is total reflection as long as $\varphi_i > \varphi_C$, where:

$$\sin \varphi_C = \frac{n_{air}}{n_{plastic}}$$

For a perfectly collimated beam of light, a flat 45-degree angled surface in the molded structure is sufficient. However, an 850nm VCSEL typically has a beam profile with significant divergence which would cause some light to refract from the plastic-/air interface within the connector at the transmit side of the link. Additionally the NA of the fiber coupling the light throughout the connector at the receiver side of the link causes some coupling loss as well. To accommodate for these effects two lenses are typically embedded in the design of the molded component as shown in Fig. 6. The external lens 661 collimates the light coming from the VCSEL 604 at the transmitter and the internal lens 605 collimates the light exiting the fiber 662 at the receiver. The lenses 661 and 605 are optically coupled by mirror 660.

Because stack height is limited in mobile phones and other hinged-display devices, Applicants recognize that it is difficult to collimate the light using traditional geometrical optical designs. Therefore, a need exists for an optical interface that not only provides effective light bending between an active device and a fiber, but also offers a low profile. The present invention fulfills this need among others.

An optical interface is disclosed in patent US 6956995 B1 (which includes the features of the preamble of claim 1). The interface includes a molded optical interface member with first and second lenses for optically interfacing with respective first and second optical components and a curved reflective surface for reflecting light from one lens to the other.

## SUMMARY OF INVENTION

The present invention may provide an optical interface for light bending within confined space by introducing misalignment into the optics. Although optical alignment along the optical axes of the optical components is typically considered critical for acceptable optical coupling, Applicants have discovered that high optical coupling performance can be achieved in a compact space by using eccentric optical elements configured for the specific optical components to which the interface couples.

According to the invention there is provided an optical interconnection including a single first optical component, a single second optical component and a molded optical interface comprising an optical clear material the molded optical interface interfacing only with the first optical component and the second optical component, said molded optical interface having at least the following features: a first lens interfacing with said first optical component; a second lens interfacing with said second optical component; a reflective surface optically coupling said first and second lenses; the first optical component having a first optical axis and being optically coupled to said first lens, and the second optical component having a second optical axis and being optically coupled to said second lens, wherein said first and second lenses have third and fourth optical axes respectively, characterised in that said first and third optical axes are offset and said second and fourth axes are offset, such that said first lens is eccentric and said second lens is eccentric.

Another aspect of the invention is a connector comprising an optical interface as described in the preceding paragraph in combination with a frame connected to the interface and configured to mechanically engage the second optical component. The second optical component may be an active component. It may comprise a laser or a photodiode. The second optical component may comprise a VCSEL. The connector may further comprise a fiber optically coupled to the first lens at one end, and a second optical connector connected to the other end of the fiber. The interface may comprise a cavity for receiving the first optical component, the cavity being dimensioned to enable passive alignment of the first optical component upon disposition of the first optical component in the cavity. The first optical component may be a fiber and the cavity may be a cylindrical cavity.

A cable assembly may be provided comprising a fiber with a connector, as described above, terminated to each end of the fiber.

A hinged-electronic device may be provided comprising two hinged modules with the cable assembly described above interconnecting the modules.

(Deleted).

## BRIEF DESCRIPTION OF DRAWINGS

Figure 1 shows a schematic of the architecture of the optical interface of the present invention.
Fig. 2 shows the optical interface of the present invention in a hinge application.

Fig. 3 shows a preferred embodiment of an active device mating with a printed circuit board.

Fig. 4 shows a multi-core structure of the optical fiber.

Fig. 5 shows a schematic of light propagating in a bend of fiber.

Fig. 6 shows molded optics for interfacing the active device with the optical fiber.

Fig. 7 shows one embodiment of the molded optics used for light bending between the active component and the optical fiber.

Fig. 8 shows the results of a simulation of error versus the number of rays per run.

Fig. 9 shows a road map for optimizing the various optical parameters for achieving maximum coupling efficiency with low interactions and low lateral misalignments.

Fig. 10 shows the molded coupling loss.

Fig. 11 displays output of the alignment sensitivity analysis.

Fig. 12 displays output of coupling loss versus end face preparation method.

Figs. 13(a)-(c) illustrate problems in compact folded optics.

Figs. 14(a)-(c) illustrate solutions to the problems identified in Figs. 13(a)-(c).

Fig. 15 is a schematic view of a cross section of the connector.

Fig. 15a is a blown up portion of the connector of Fig. 15 corresponding to the optical interface.

Fig. 16 is a schematic of an optical assembly comprising the connectors of the embodiment shown in Fig 15 optically coupled to active devices.

## DETAILED DESCRIPTION

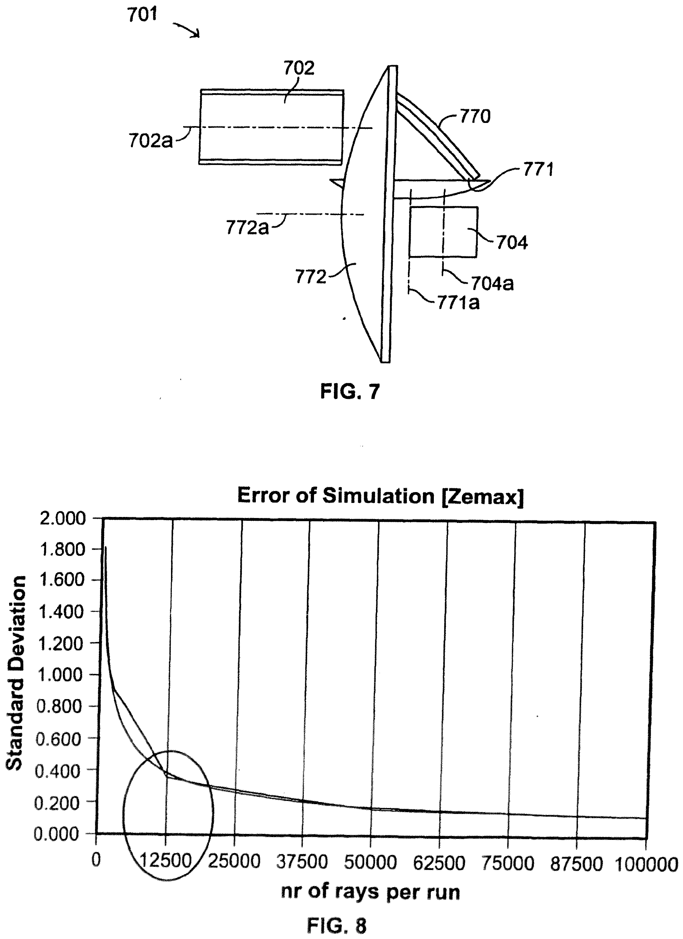

Referring to Fig. 7, a schematic of one embodiment of the optical interconnection of the present invention is shown. The interface 701 is configured to optically couple a first optical component 702 and a second optical component 704. The optical interface comprises an optical clear material having at least the following optical elements: (a) a first lens 772 for interfacing with the first optical component; (b) a second lens 771 for interfacing with the second optical component; (c) a reflective surface 770 optically coupling the first and second lenses; and (d) wherein the first lens is eccentric, and the second lens is eccentric.

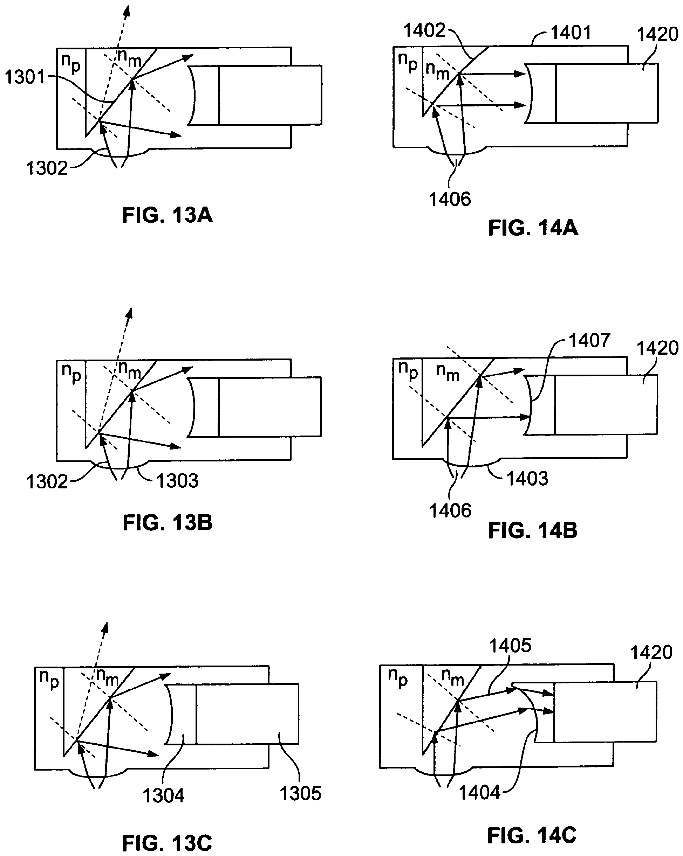

Applicants discovered that eccentrically aligning one or more optical elements of the interface allows the interface to overcome divergence of the active device within a relatively low profile. Specifically, referring to Fig. 13(a), Applicants discovered that a flat reflective surface 1301 is generally unable to collimate a divergent beam 1302 within given dimensional constraints and performance criteria-i.e., a low profile design capable of passive alignment with an active device having a divergence beam. However, if the reflective surface 1402 is eccentric, that is, free-formed or curved at one or more radii, as shown in Fig. 14(a), the inputted diverging beam 1406 can be collimated. In one embodiment, the reflective surface has a compound curve having two radii of curvature. In such an embodiment, the curve may be considered a portion of a donut shape in which one radius is the radius across the width of the donut, and the other radius is the radius of the cross section of the donut ring itself. Although a compound curve having two or more radii is disclosed in detail herein, it should be understood that the curve may have more than two radii, it may have a continuously-changing radii as in a hyperbolic curve, or it may have no discernable radii at all. Furthermore, it should be understood that the curved reflective surface may comprise a reflective material, or it may be comprise an interface, of materials having different refractive indices, for example, an air-to-plastic interface, such that light hitting the surface at an angle greater than the critical angle for internal reflection will be reflected. This is a well known principle.

Referring to Fig. 13(b), Applicants discovered that the lens 1303 interfacing with an active device (not shown) is not able to collimate the divergent beam 1302 of an active device within a small dimensional envelope. Although a lens with a shorter radius curve may be used to increase the degree of collimation, such a lens will naturally be smaller and thus more difficult to passively align with the active component. Applicants found, however, that a relatively large lens 1403 can be used (and thus facilitate passive alignment) if it is eccentrically aligned with the active device (not shown) as depicted schematically in Fig. 14(b). Such a lens bends the diverging light 1406 such that a larger portion couples with the lens 1407.

Referring to Fig. 13(c), Applicants also discovered that the lens 1304 interfacing with the fiber 1305 is generally unable to collimate the divergent beam reflected off the reflective surface within the desired low-profile form factor. Applicants found again, however, that an eccentrically aligned lens 1404 improves the light coupling from the lens 1404 to the fiber 1420 as shown schematically in Fig. 14(c). Specifically, light that is reflected into the corner 1405 of the lens 1404 is bent sharply by the relatively severe curvature of the lens 1404, due to the lens's eccentricity, causing it to focus on the fiber 1420.

Referring back to the schematic shown in Fig. 7, one can better see the eccentricity of the lenses. Specifically, the first lens 772 is shifted away from the reflective surface 770, toward the second lens 771. This way, its optical axis 772a is below the optical axis 702a of the first optical component 702. The second lens is also shifted away from the reflective surface 770, toward first lens 772. This has the effect of moving the optical axis 771a of the second lens 771 to the left of the optical axis 704a of the second optical component 704 (given this particular perspective). For example, offsets between the optical axes can vary, although typically they range from about 10 to about 100 microns.

The interface of the present invention has the first lens, and the second lens, eccentrically aligned. In one embodiment, all three optical elements, i.e., the first lens, the second lens, and the reflective surface, are eccentrically aligned.

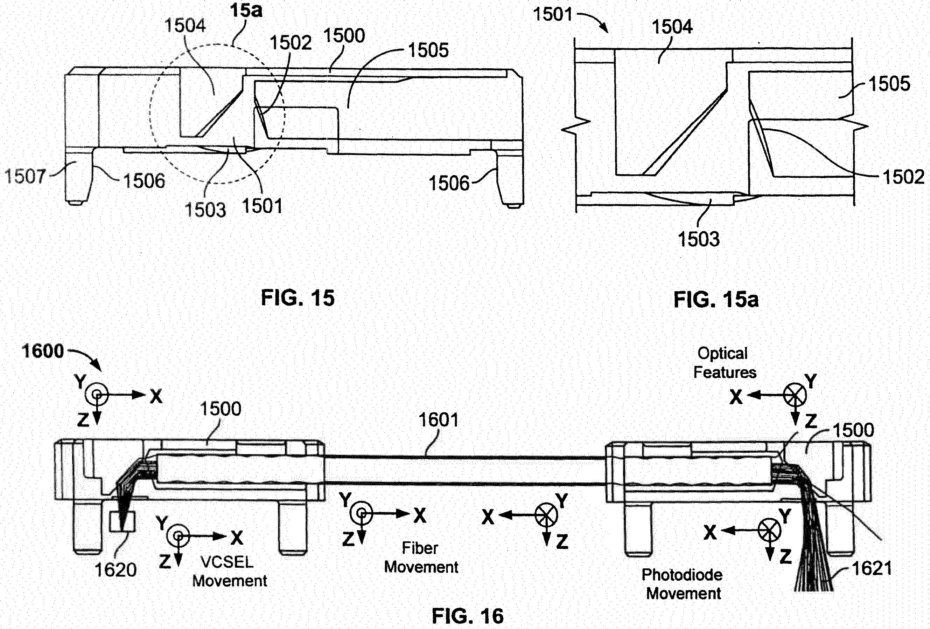

Referring to Fig. 15, one embodiment of a connector 1500 of the present invention is shown. Fig. 15a shows a close up view of the optical interface 1501 of the connector 1500. Specifically, the connector comprises (a) interface 1501 for interfacing a first optical component (not shown) and a second optical component (not shown), the optical interface comprising an optical clear material having at least the following features: (i) a first lens 1502 for interfacing with the first optical component; (ii) a second lens 1503 for interfacing with the second optical component; (iii) a reflective surface 1504 optically coupling the first and second lenses; (iv) wherein at least the first lens is eccentric, the second lens is eccentric, or the reflective surface is curved; and (b) a frame 1507 connected to the interface and configured to mechanically engage the second optical component or a substrate containing the second optical component.

The first and second optical components may be any optical component or device, such as a fiber, an active device, or a passive device. As used herein, an active device is one comprising an opto-electric device. An "opto-electronic device" or OED refers to a device which converts electrical current to light and/or light to electrical current. The term "light" refers generally to electromagnetic radiation, and preferably to those wavelengths of electromagnetic radiation to which semi-conductive material is, or can be made, sensitive, whether or not such light is actually visible to the unaided eye. Examples of opto-electronic devices include lasers (e.g., vertical cavity surface emitting laser (VCSEL), double channel, planar buried heterostructure (DC-PBH), buried crescent (BC), distributed feedback (DFB), distributed bragg reflector (DBR), etc.), light emitting diodes (LEDs) (e.g. surface emitting LED (SLED), edge emitting LED (ELED), super luminescent diode (SLD), resonant cavity light emitting diodes (RCLED), etc.) or photodiodes (e.g., P Intrinsic N (PIN), avalanche photodiode (APD), etc.). As used herein, a passive device is a device that changes the state, quality, or number of occurrences of an optical signal, and includes, for example, multiplexers /demultiplexers, filters, attenuators, combiners, splitters.

In one embodiment, the connector 1500 comprises a cavity 1505 for receiving the first optical component. The cavity 1505 may be sized to enable passive alignment of the first optical component upon disposition of the first optical component in the cavity optical. For example, if the first optical component is a fiber, the cavity may be a cylindrical cavity, in which the diameter of the cavity is just slightly larger than the diameter of the fiber such that when the fiber is disposed in the cavity, it is aligned passively with the first lens. It should be understood that the cavity may be configured as other shapes to receive different optical components. For example it may be rectangular to receive an active component mounted on a lead frame, or it may have a wedding-cake shape to receive a TO can. Still other shapes will be obvious to one of skill in the art in light of this disclosure.

The frame 1507 functions to hold the connector 1500 in relation to the second optical component. Different frames may be configured can be used depending on the application. For example, in one embodiment, the frame 1507 holds the interface and has at least one mating member 1506 for interconnecting with a mating structure associated with the second optical component or substrate upon which the second optical component is mounted. The mating member 1506 is disposed a certain distance form the second lens 1503 such that, when the mating member interengages with the second mating connector, the second lens is optically coupled with the optical component through passive alignment. Such connection mechanisms are well known.

Referring to Fig 16, a schematic is shown of a cable assembly 1600 incorporating a connector 1500 as described in Fig. 15 at each end of a cable 1601. In this particular embodiment, the cable assembly connects a VCSEL 1620 to a photodiode 1621. This embodiment of the cable uses identical connectors at either end, thereby eliminating any polarity in the cable assembly. This simplifies the cable assembly's installation. Although a VCSEL and photodiode are depicted, it should be understood that the cable assembly may be used to optically couple any two components. For example, rather than interfacing with OEDs, it may be used as a patch cord to interface with optical connectors (which may be, in turn, connected to other fibers) or passive devices. Likewise, one end may interface with an OED and the other with a passive device or a connector. Still other applications will be obvious to one of skill in the art in light of this disclosure.

Now a particular embodiment of the present invention will be considered in detail. This embodiment relates to an optical interface for connecting a display module to a host module in a hinged-display device, which, in this example, is a cellular phone. It may be understood, however, that reference to a cellular phone is made only for illustrative purposes and the invention is not limited to such applications. For example, the interface may be used with any hand-held or compact device having a modular display, meaning a display that is not integral with the host module and must be connected via an electrical or optical interface. Such devices include, for example, cell phones, PDAs, portable DVDs, video games, cameras, laptop computers, etc. Additionally, the invention may be used apart from a cable assembly including in any application requiring light-bending in a low-profile envelope, such as, for example, optical subassemblies in active devices such as transceivers, transmitters, and receivers.

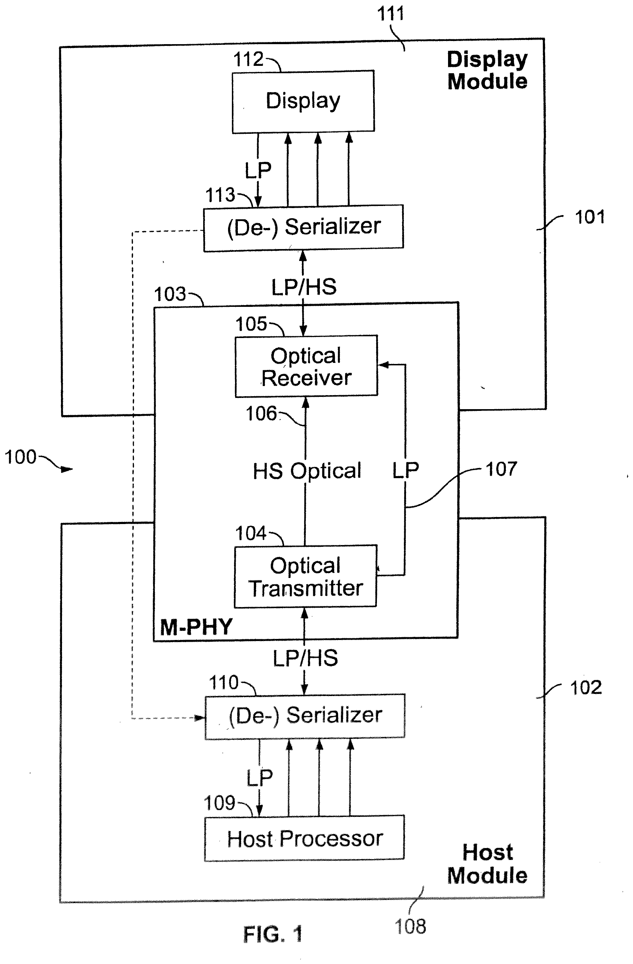

Referring to Fig. 1, a serial link architecture 100 is shown. The architecture 100 comprises a display module 101 with a host module 102. The host module 102 comprises at least a transmitter 104 and the display module 101 comprises a receiver 105. An optical cable assembly 106 connects the transmitter to the receiver. The various elements of the serial link and display device are considered in greater detail below.

The host module 102 typically comprises a host circuit board 108 comprising a main or host process processor 109 for the device and one or more drivers for the display. The display module 101 comprises a display circuit board 111 having a display processor 112. The host and display modules are connected by the cable assembly 106. Signals from the host processor 109 are serialized in serializer 110. The serialized signal is then converted into an optical signal by transmitter 104, and then transmitted to the optical receiver 105 via the cable assembly 106. The optical signals received by the optical receiver 105 are converted to electrical signals and de-serialized in de-serializer 113. At this point, the parallel signals are received by a display processor resulting in an image being displayed on the display.

As mentioned above, one reason to use a serial link in hinge-type display devices is to replace the bulky parallel cable assembly connecting the display with the host module. Although higher level protocols (such as UniPro) may require a downstream link to operate, the actual physical layer, as defined in MIPI (M-PHY) for high speed serial communication, is unidirectional at this time. Future phone architectures, however, may require M-PHY compatible links in both directions across the hinge. To this end, a full duplex link using two optical transceivers may offer lower cost and smaller footprint instead of using two simplex links as described above. Although unidirectional links are described in detail herein, most of the design considerations apply to both simplex and duplex link architectures. Furthermore, it may be understood that the invention is not limited to serial links and that it may be practiced to facilitate parallel links too.

The traffic across the serial link does not necessarily operate continuously at high speed. To save power being consumed by the electro-optical conversion of the serial link an intelligent serial link can distinguish between high speed (HS) and low power (LP) mode. To this end, the architecture 100 may switch HS traffic across the serial link and bypass LP traffic across a galvanic channel 107. Hybrid connector concepts combining HS optical with LP galvanic channels may evolve offering lower total applied cost in mobile phone assembly.

The embodiment of Fig. 1 comprises a surface mount technology (SMT) style optical transmitter 104 on the host module and an optical receiver 105 on the display module. A fiber optic cable assembly 106 interconnects both the transmitter and the receiver. The electro-optical conversion may be performed using any know opto-electric transmitter, such as, for example, a low threshold 850nm VCSEL. Such a device offers high speed in combination with low power consumption. The light at the receiver end is collected by a silicon photodiode with an effective area large enough allowing for a passively aligned connector concept and small capacitance adequate for gigabit transmission.

The serial link architecture 100 may be configured not only to comply with the electrical specifications as defined in M-PHY, but also to offer maximum ease of assembly. To this end, it is generally preferred, although not necessary, that the cable assembly be a pluggable optical interconnect. There are a number of benefits of having the cable assembly discrete from the modules and their components.

For example, having the transmitters and receivers unencumbered with a cable assembly facilities the use of commercially-available, highly-automated assembly processes using pick and place robots for mounting the components on the substrate of host and display modules of the handheld device. Such a process requires these components to withstand extreme temperatures as applied during ROHS compliant reflow soldering processes. The design constraints associated with these processes tend to limit the choice of optical transmission media used in the cable assembly, i.e., plastic optical fiber would melt. Accordingly, it makes sense to segregate these components from the cable assembly.

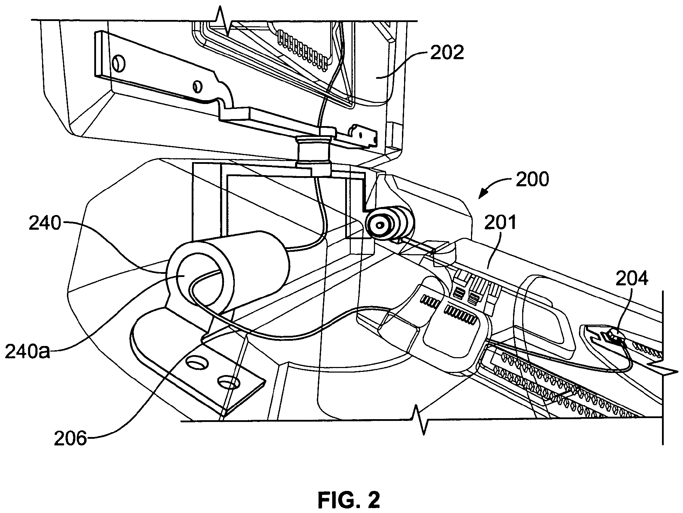

Additionally, with this configuration, the transmitter and receiver devices may be SMT-style components compatible with available integration technologies, while the cable assembly can be optimized for optical performance and mechanical robustness toward static and dynamic bending and twisting. Keeping the active components separate from the cable assembly also results in smaller interconnection components at the end of the cable assembly thus allowing for very small passageway diameters in the hinge. For example, referring to Fig. 2, the hinged-display device 200 comprises a hinge 240 defining a passageway 240a. By having the optical cable 206 detachable from the transmitter 204 on the keypad 201, the passageway 240a needs to be wide enough only to accommodate the cable and not the transmitter.

Besides the manufacturing advantages, there is also a benefit of segregating the active components from the cable assembly with respect to optimizing the supply chain. Specifically, the highly automated assembly of SMT style components may be performed in one manufacturing facility, while the actual routing of the cable assembly, which, in most cases, is manual, may be performed at another location. Moreover, it provides a modular design concept allowing for future upgrades with respect to speed, power consumption, functionality and size of the active components without changing the physical structure of the cable assembly. Likewise, the cable assembly may be developed and improved (e.g., hybrids combining serial links with galvanic channels, longer length cable assemblies for external applications, etc.) without design complications related to the active components.

The mechanical interconnection between the optical cable and the active devices (i.e., transmitter and receiver) is configured to provide adequate coupling between the active devices and the optical medium of the optical cable. Preferably, this is achieved through a passively aligned opto-mechanical interface between cable and active device that is able to maintain its performance despite all sources of variability in the manufacturing process. Furthermore, to avoid errors during phone assembly, in which the cable assembly is routed the wrong way, the interconnection preferably is the same at either active device (i.e., the transmitter or receiver). In other words, the same connector may be used for connecting to either the transmitter or receiver. However, this approach may not be preferred if it would result in an overall average coupling efficiency that is lower compared to a customized design for transmitter respectively receiver.

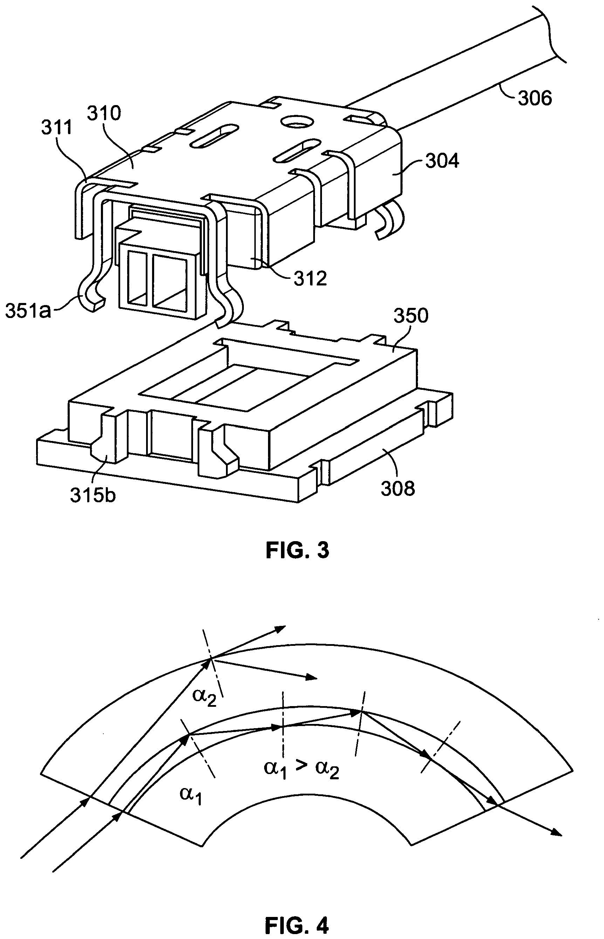

In general, a vertical mating configuration is preferred above a horizontal mating configuration because it requires less mating travel across the printed circuit board. Moreover, a vertical mating concept provides better opportunities for automation. For example, referring to Fig. 3, a connectorized end 304 of the optical cable 306 is shown in a position to be mated with a mating device 350 on a substrate 308. The mating device 350 may comprise a transmitter, receiver, transceiver, or any other active or passive device. The connectorized end 304 comprises connector 310 comprising a frame 311 and an interface 312 contained within the frame. The connector is mated with the mating device 350 by pushing it down onto the device at which the mating members 351a on the frame 311 engage corresponding mating members 351b of the mating device. Such vertical mating consumes very little area on the substrate (e.g. printed circuit board) and facilitates automated coupling. Such mating configurations are well known in the art and alternative configurations will be obvious to one of skill in the art in light of this disclosure.

The optical cable 106 comprises an optical medium for carrying the optical signals. The main challenge for establishing an link in a hinge type handheld device is selecting an optical transmission medium that provides adequate bandwidth while accommodating a tight bend situation. By way of review, optical transmission is based on the phenomenon of total reflection. According to Snell's law the light is being totally reflected throughout the core of the optical transmission medium as long as the angle of incidence ($\alpha$) at the core-/cladding interface is greater than the critical angle ($\varphi c$) which is constraint by the refractive indices (ncore and nclad) of respectively core- and cladding material as follows:

$$\sin\varphi_C = \frac{n_{clad}}{n_{core}}$$

As a result of cable bending the angle of incidence ($\alpha$) at the core-/cladding interface reduces which requires a relatively large difference in refractive index between core and cladding to still meet the criteria for total reflection. Consequently, the bending sensitivity of the fiber might be enhanced by increased numerical aperture (NA) based on the following:

$$NA = \sqrt{n_{core}^2 - n_{clad}^2}$$

However, increasing the NA of the fiber structure would cause bandwidth limitations as a result of multimode dispersion. The pulse-broadening effect in a step-index multimode fiber with length L (assuming full excitation of all guided modes) can be approximated by the following formula (where c represents the speed of light in vacuum):

$$\Delta t_{mod} \cong \frac{NA^2}{2 \cdot n_{core} \cdot c} \cdot L \quad [s]$$

Although the cable length in a mobile phone architecture may be limited, the pulse broadening effect of high NA fibers may be significant for higher transmission speeds. Therefore, multimode dispersion remains a consideration.

Another way of reducing the bending sensitivity of the fiber structure is by reducing the diameter of the fiber core. The angle of incidence ($\alpha$) for small fiber cores in a tight bend situation is larger compared to a fibers with large core diameters. Therefore, the bending radius of fibers with small core diameters can be smaller compared to fibers with large core diameters assuming similar NA as shown schematically in Fig. 4.

Referring to Fig. 5, a multi-core plastic optical fiber 500 combines the advantages of small diameters (e.g., 501a-501c) reducing bending sensitivity with a numerical aperture low enough to enable > 1Gbps transmission speed. Moreover, the cumulative area of the multiple cores allows for low alignment sensitivity in a passively aligned connector concept.

The interface of the cable assembly 106 is described generally above with respect to Figs. 7, 14 and 15. However, the actual configuration of the interface, for example, the degree of eccentricity of the lenses and the curvature of the reflective surface is based on an optimization of a number of factors including physical and optical variables in the system plus power consumption requirements. Although approaches for this optimization may vary, an exemplary approach is provided below.

Example

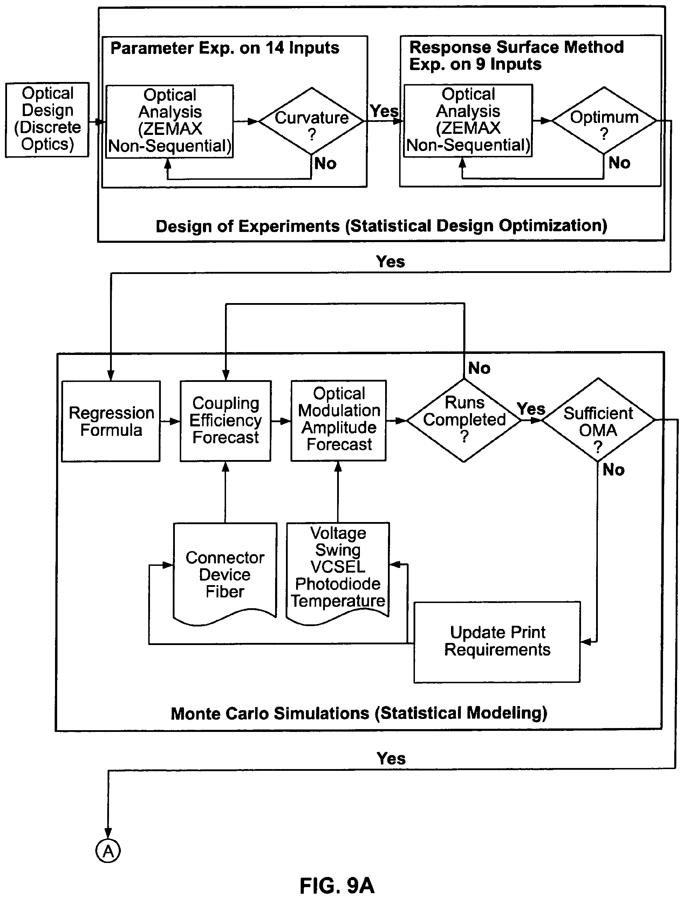

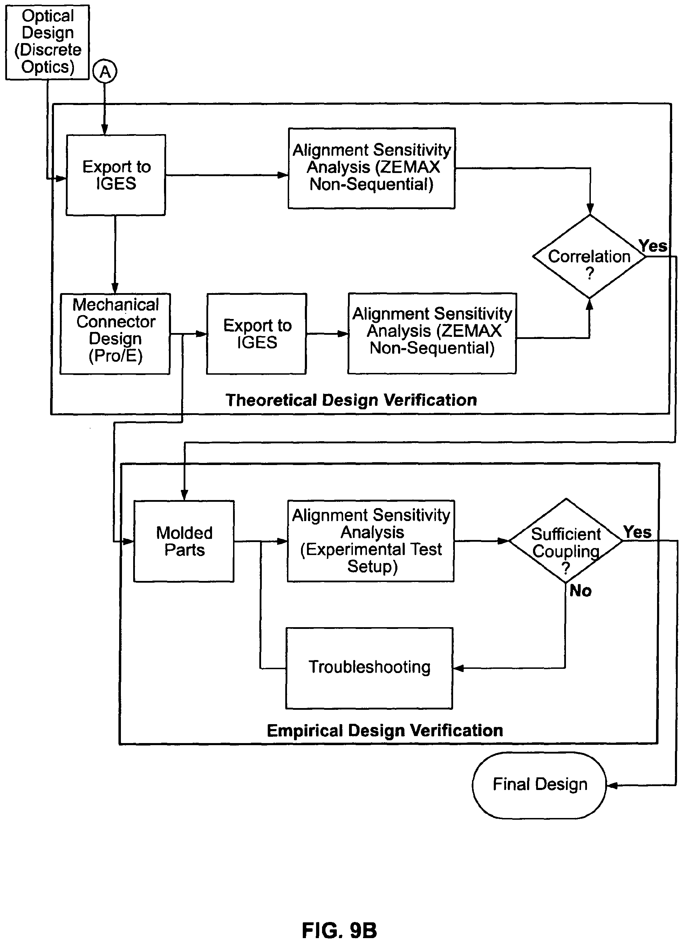

This example illustrates a statistical approach based on a Lean Design for Six Sigma (LDFSS) roadmap to optimize the design of the interface for robustness, low cost, and minimal power consumption. A flowchart of the overall process is depicted in Fig. 9. There are four subprocesses targeting for the best design offering maximum coupling between VCSEL and photodiode taking into account predictable sources of variability.

The design roadmap initiates with an optical concept based on two spherical lenses and a freeform mirror. A list of all potential inputs affecting the coupling efficiency of the link was generated based on principle knowledge of optics and some screening experiments. This list was divided in so-called 'knob variables' and 'noise factors'. As expected for an optical design using a circular VCSEL aperture, photodiode, core structures, spherical lenses and a mirror, the center-points revealed significant curvature in the response of the coupling efficiency of the link. Since the parameter experiment considered all factors at only two levels this statistical tool was not able to quantify non-linear responses. However, it provided a short-list of the nine most significant parameters (as well as interactions between parameters) that were worthwhile exposing to a response surface method experiment in the Minitab® software (1/4 central composite, face centered) requiring 160 runs in the ZEMAX® software.

For each run as defined by the Design of Experiments (DOE), the ZEMAX® software needed to calculate the coupling efficiency of the link. The parameters as varied in the DOE were applied to the optical model using the standard discrete optical elements as available in the software library. The ZEMAX® software was used in non-sequential mode in order to validate the phenomenon of total reflection at the plastic-/air interface of the freeform mirror. A near field scan of the VCSEL was used to define the beam profile of the source in the optical simulations. The graph shown in Fig. 8 illustrates the order of magnitude of the error of simulation as a function of the number of rays per run randomly retrieved from the beam profile. A number of 12,500 rays per run were found to be adequate for providing sufficient modeling accuracy at moderate computational effort.

The results of the DOE provided the optimum settings for all of the remaining nine parameters achieving maximum coupling efficiency with low interactions with lateral misalignments. Moreover, it generated a regression formula describing the coupling efficiency of the interface as a function of all of the nine input parameters. More than 99% of the response may be described by a constant (k), six significant main effects ($\alpha$), five quadratic effects ($\beta$) and seven two-way interactions (y):

$$CE = k + \alpha_1 \cdot A + \alpha_2 \cdot C + \alpha_3 \cdot D + \alpha_4 \cdot F + \alpha_5 \cdot G + \alpha_6 \cdot J + \beta_1 \cdot A^2 + \beta_2 \cdot B^2 + \beta_3 \cdot C^2 + \beta_4 \cdot H^2 + \beta_5 \cdot J^2 + \gamma_1 \cdot AC + \gamma_2 \cdot AD + \gamma_3 \cdot AG + \gamma_4 \cdot AJ + \gamma_5 \cdot EG + \gamma_6 \cdot FJ + \gamma_7 \cdot GJ$$

Wherein:

A    X coordinate transmitter relative to molded optics
B    Y coordinate transmitter relative to molded optics
C    Z coordinate external lens relative to alignment features of molded optics on TX connector
D    X coordinate mirror relative to alignment features of molded optics on TX connector
E    X coordinate mirror relative to alignment features of molded optics on RX connector
F    Radius external lens of molded optics on RX connector
G    X coordinate receiver relative to molded optics
H    Y coordinate receiver relative to molded optics
J    Z coordinate receiver relative to molded optics

These variable are depicted in Fig. 16. The regression formula as provided by the DOE was used as a basis for a Monte Carlo Simulations analysis. Assumed process capability data for the fiber, connector and active device provided input for the regression formula parameters A to J. The Monte Carlo Simulations software repeatedly recalculated the coupling efficiency varying the values of all input parameters randomly across their assumed distributions.

Using the forecasted coupling efficiency combined with the assumed variability of the VCSEL (threshold current, slope efficiency) and its behavior with respect to the actual operating temperature and aging over life, the model was able to predict the Optical Modulation Amplitude (OMA) representing the difference in optical power between a logical '0' and '1' collected by the photodiode. Based on the forecasted OMA and the assumed variability of the photodiode (sensitivity) one can design a Trans Impedance Amplifier (TIA) and Limiting Amplifier (LA) IC meeting the electrical interface requirements as defined per M-PHY.

In general, the power consumption of the total interface is a trade-off between keeping the drive current to the VCSEL as small as possible though high enough providing adequate optical power avoiding the need for unnecessary amplification. A worst case scenario might result in an OMA that does not fit within the power budget requirements of the interface, although this is very unlikely. The Monte Carlo Simulations model is effective to determine the optimum drive strategy for providing bias and modulation current to the VCSEL to minimize power consumption while providing adequate performance.

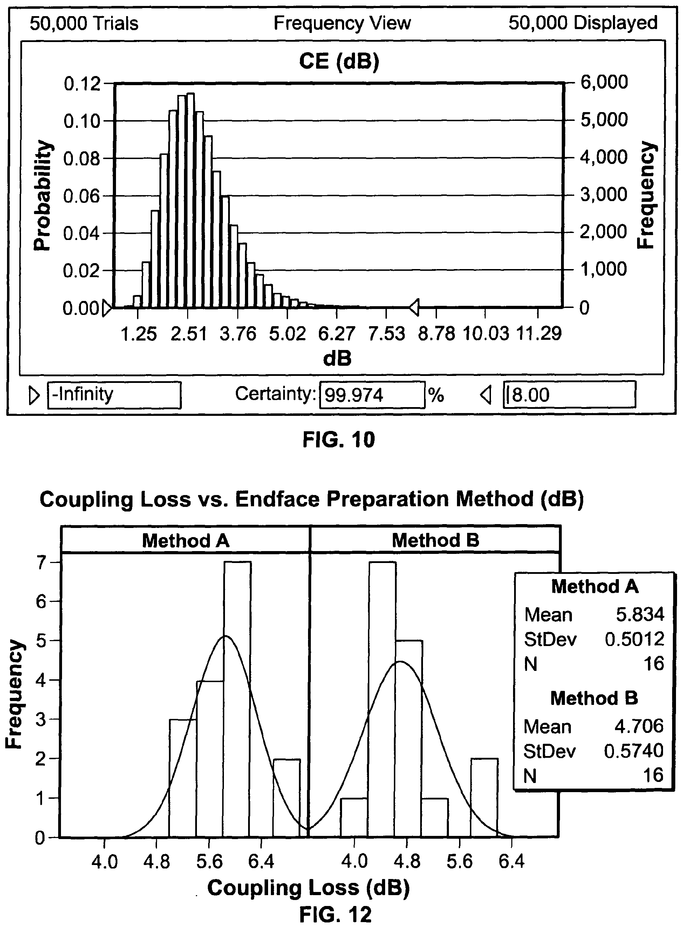

The histogram of Fig. 10 illustrates the modeled coupling efficiency for the interface in units of dB loss.

Driving the VCSEL in open loop mode tends to simplify IC design. With a fixed bias and modulation current, the coupling efficiency allows for > 1.5Gbps transmission with a BER of $10^{-12}$, taking into account sources of variability affecting the performance of the interface. The average power consumed by the VCSEL in open loop is <15mW. While the coupling efficiency distributions as forecasted by the Monte Carlo Simulations in an open loop approach indicate an average power consumption appropriate for battery operated devices, there is always a need for power consumption reductions. To this end, the Monte Carlo Simulations model provides an effective platform to identify opportunities for improving the process capability of the individual building blocks (VCSEL, photodiode, fiber, connector, etc).

Moreover, advanced driver functionality may also reduce the average power consumption of the driver significantly. The driver might accommodate for different bias and modulation settings for different bins by categorizing the VCSELs by their threshold current. Moreover, the driver may feature a temperature sensor selecting a bias and modulation setting from a look-up table compensating the temperature dependency of the VCSEL.

Ultimately, the driver might use a closed loop strategy feeding back the actual power received by the photodiode. Although the average power consumption of such a closed loop approach may be reduced significantly, this approach impacts significantly the physical implementation of the interconnect since it requires a downstream channel to feedback the actual power status to the VCSEL driver.

The actual design of the mechanical geometry of the connector was done using Pro/ENGINEER® solid modeling tool. The optical design as defined by the discrete optical elements in ZEMAX® was imported as a skeleton part in the Pro/ENGINEER® software by using an IGES file format.

To this point, the optical simulations were based on a model built up from discrete optical elements. However, the mechanical design of the optical connector might have affected the optical performance of the molded component. In order to integrate all optical elements within the envelope available for the interconnect the edges of the mirror and spherical lenses needed to be clipped away. This may have caused optical disturbances and reflections within the optical connector causing differences in coupling efficiency performance with respect to the initial design.

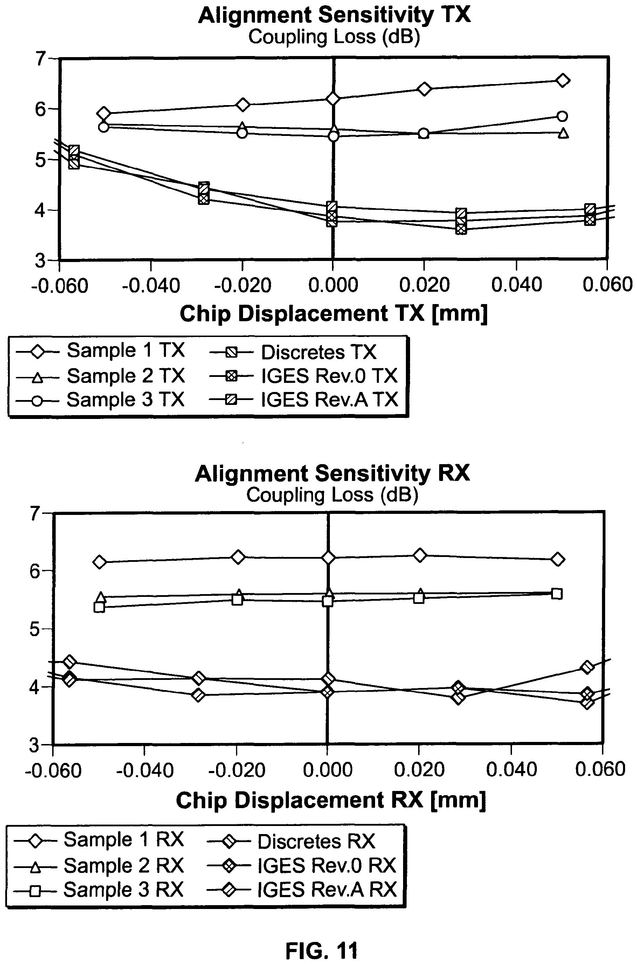

To verify the effect of the connector geometry on the optical performance of the connector the mechanical model was exported back to an IGES file format and imported back in the ZEMAX® software. By moving the IGES model relative to the VCSEL and photodiode the alignment sensitivity of the interconnect may be evaluated at both the transmitter and the receiver side of the interface. As shown in Fig. 11, the alignment sensitivity of the IGES file appeared to be very similar compared to the initial model using discrete optical elements.

Finally, a tool was built to actually produce the molded components. In an experimental set-up the alignment sensitivity of three links were measured. The design was proven very insensitive for misalignments, although the coupling loss of the samples was significantly higher compared to the simulated product. Further investigations revealed that the poor optical quality of the fiber end-faces caused a great deal of the differences in average coupling as shown in Fig. 12. More advanced methods of processing the fiber end-faces proved that the average coupling may be improved by more than 1dB.

An assessment of a batch of 16 cable assemblies provided an average measured coupling efficiency (randomly mated) of 4.7dB, which is getting close to the average coupling loss as forecasted by the Monte Carlo Simulations. Assuming a normally distributed coupling loss with an average of 4.7dB and a standard deviation of 0.57dB indicates a worst case link loss of 6.41dB between VCSEL and photodiode based on a +/- $3\sigma$ tolerance range.

The process described above, resulted in a cable assembly capable of connecting the transmitter and receiver ends of an interface that is used in interfacing the host module to the display of a handheld multimedia device. The product was successfully tested at a speed of 1.5Gbps. With a cable length of 0.5m and driving the VCSEL open loop, the power consumed by the link including driver, VCSEL, photodiode, TIA and LA IC was as low as <23.5mW. This translates into a power consumption of ~21mW for a cable length of only 10cm.

## Claims

1. An optical interconnection including a single first optical component (702, 1601), a single second optical component (704, 1620) and a molded optical interface (701, 1501) comprising an optical clear material, the molded optical interface (701, 1501) interfacing only with the first optical component (702, 1601) and the second optical component (704, 1620), said molded optical interface (701, 1501) having at least the following features:

a first lens (772, 1502) interfacing with said first optical component (702, 1601);

a second lens (771, 1503) interfacing with said second optical component (704, 1620);

a reflective surface (770, 1504) optically coupling said first (772, 1502) and second (771, 1503) lenses;

the first optical component (702, 1601) having a first optical axis (702a) and being optically coupled to said first lens (772, 1502), and the second optical component (704, 1620) having a second optical axis (704a) and being optically coupled to said second lens (771, 1503),

wherein said first (772, 1502) and second (771, 1503) lenses have third (772a) and fourth (771a) optical axes respectively,

**characterised in that** said first (702a) and third (772a) optical axes are offset and said second (704a) and fourth (771a) axes are offset, such that said first lens (772, 1502) is eccentric and said second lens (771, 1503) is eccentric.

2. The interconnection of claim 1 wherein said reflective surface (770, 1504) is curved.

3. The interconnection of claim 2, wherein said reflective surface (770, 1504) comprises at least two curves of different radii.

4. The interconnection of any preceding claim, wherein said molded optical interface (701, 1501) further comprises a cavity (1505) receiving said first optical component (702, 1601), said cavity (1505) being dimensioned to enable passive alignment of said first optical component (702, 1601) upon disposition of said first optical component (702, 1601) in said cavity (1505).

5. The interconnection of claim 4, wherein said first optical component (702, 1601) is a fiber and said cavity (1505) is a cylindrical cavity.

6. The interconnection of any preceding claim, further comprising a frame (1507) holding said interface (1501), said frame (1507) having at least one mating member (1506) for interconnecting with a mating structure associated with said second optical component (1620), said mating member (1506) being disposed a certain distance from said second lens (1503) such that, when said mating member (1506) interengages with said mating structure, said second lens (1503) is optically coupled with said optical component (1620) through passive alignment.

7. The interconnection of claim 6 wherein said second optical component (1620) is an active component.

8. The interconnection of claim 7 wherein said second component (1620) comprises a laser or a photodiode.

9. The interconnection of claim 8 wherein said second optical component (1620) comprises a VCSEL.

**Patentansprüche**

1. Optische Verbindung, die eine einzelne, erste optische Komponente (702, 1601), eine einzelne, zweite optische Komponente (704, 1620) und eine geformte optische Schnittstelle (701, 1501) beinhaltet, die ein optisches klarsichtiges Material umfasst, wobei die geformte optische Schnittstelle (701, 1501) nur mit der ersten optischen Komponente (702, 1601) und der zweiten optischen Komponente (704, 1620) eine Schnittstelle bildet, wobei die genannte geformte optische Schnittstelle mindestens die folgenden Merkmale aufweist:

eine erste Linse (772, 1502), die mit der genannten ersten optischen Komponente (702, 1601) eine Schnittstelle bildet;

eine zweite Linse (771, 1503), die mit der genannten zweiten optischen Komponente (704, 1620) eine Schnittstelle bildet;

eine reflektierende Oberfläche (770, 1504), die die genannte erste (772, 1502) und zweite (771, 1503) Linse optisch koppelt;

wobei die erste optische Komponente (702, 1601) eine erste optische Achse (702a) aufweist und mit der genannten ersten Linse (772, 1502) optisch gekoppelt ist und die zweite optische Komponente (704, 1620) eine zweite optische Achse (704a) aufweist und mit der genannten zweiten Linse (771, 1503) optisch gekoppelt ist, wobei die genannte erste (772, 1502) und zweite (771, 1503) Linse eine dritte (772a) bzw. vierte (771a) optische Achse aufweisen,

**dadurch gekennzeichnet, dass** die genannte erste (702a) und dritte (772a) optische Achse versetzt sind und die genannte zweite (704a) und vierte (771a) Achse versetzt sind, sodass die genannte erste Linse (772, 1502) exzentrisch ist und die genannte zweite Linse (771, 1503) exzentrisch ist.

2.  Verbindung gemäß Anspruch 1, wobei die genannte reflektierende Oberfläche (770, 1504) gekrümmt ist.

3.  Verbindung gemäß Anspruch 2, wobei die genannte reflektierende Oberfläche (770, 1504) mindestens zwei Krümmungen mit unterschiedlichen Radien beinhaltet.

4.  Verbindung gemäß einem vorhergehenden Anspruch, wobei die genannte geformte optische Schnittstelle (701, 1501) ferner einen Hohlraum (1505) umfasst, der die genannte erste optische Komponente (702, 1601) aufnimmt, wobei der genannte Hohlraum (1505) dimensioniert ist, um eine passive Ausrichtung der genannten ersten optischen Komponente (702, 1601) bei Anordnung der genannten ersten optischen Komponente (702, 1601) im genannten Hohlraum (1505) zu ermöglichen.

5.  Verbindung gemäß Anspruch 4, wobei die genannte erste optische Komponente (702, 1601) eine Faser und der genannte Hohlraum (1505) ein zylindrischer Hohlraum ist.

6.  Verbindung gemäß einem vorhergehenden Anspruch, die ferner einen Rahmen (1507) beinhaltet, der die genannte Schnittstelle (1501) hält, wobei der genannte Rahmen (1507) mindestens ein Zusammenpassglied (1506) zum Verbinden mit einer Zusammenpassstruktur aufweist, die mit der genannten zweiten optischen Komponente (1620) assoziiert ist, wobei das genannte Zusammenpassglied (1506) in einem gewissen Abstand von der genannten zweiten Linse (1503) angeordnet ist, sodass, wenn das genannte Zusammenpassglied (1506) mit der genannten Zusammenpassstruktur ineinandergreift, die genannte zweite Linse (1503) mit der genannten optischen Komponente (1620) durch passive Ausrichtung optisch gekoppelt ist.

7.  Verbindung gemäß Anspruch 6, wobei die genannte zweite optische Komponente (1620) eine aktive Komponente ist.

8.  Verbindung gemäß Anspruch 7, wobei die genannte zweite Komponente (1620) einen Laser oder eine Fotodiode beinhaltet.

9.  Verbindung gemäß Anspruch 8, wobei die genannte zweite optische Komponente (1620) einen VCSEL-Laser beinhaltet.

**Revendications**

1.  Interconnexion optique comportant un premier composant optique unique (702, 1601), un second composant optique unique (704, 1620) et une interface optique moulée (701, 1501) comprenant un matériau optique transparent, l'interface optique moulée (701, 1501) s'interfaçant uniquement avec le premier composant optique (702, 1601) et le second composant optique (704, 1620), ladite interface optique moulée (701, 1501) présentant au moins les caractéristiques suivantes :

    une première lentille (772, 1502) s'interfaçant avec ledit premier composant optique (702, 1601) ;
    une seconde lentille (771, 1503) s'interfaçant avec ledit second composant optique (704, 1620) ;
    une surface réfléchissante (770, 1504) couplant optiquement lesdites première (772, 1502) et seconde (771, 1503) lentilles ;
    le premier composant optique (702, 1601) ayant un premier axe optique (702a) et étant optiquement couplé à ladite première lentille (772, 1502), et le second composant optique (704, 1620) ayant un deuxième axe optique (704a) et étant optiquement couplé à ladite seconde lentille (771, 1503), dans lequel lesdites première (772, 1502) et seconde (771, 1503) lentilles ont respectivement des troisième (772a) et quatrième (771a) axes optiques,
    **caractérisée en ce que** lesdits premier (702a) et troisième (772a) axes optiques sont décalés et lesdits deuxième (704a) et quatrième (771a) axes sont décalés, de telle sorte que ladite première lentille (772, 1502) soit excentrique et ladite seconde lentille (771, 1503) soit excentrique.

2.  Interconnexion selon la revendication 1, dans laquelle ladite surface réfléchissante (770, 1504) est incurvée.

3.  Interconnexion selon la revendication 2, dans laquelle ladite surface réfléchissante (770, 1504) comprend au moins deux courbes de rayons différents.

**4.** Interconnexion selon l'une quelconque des revendications précédentes, dans laquelle ladite interface optique moulée (701, 1501) comprend en outre une cavité (1505) qui reçoit ledit premier composant optique (702, 1601), ladite cavité (1505) étant dimensionnée pour permettre un alignement passif dudit premier composant optique (702, 1601) lors de la pose dudit premier composant optique (702, 1601) dans ladite cavité (1505).

**5.** Interconnexion selon la revendication 4, dans laquelle ledit premier composant optique (702, 1601) est une fibre et ladite cavité (1505) est une cavité cylindrique.

**6.** Interconnexion selon l'une quelconque des revendications précédentes, comprenant en outre un cadre (1507) qui retient ladite interface (1501), ledit cadre (1507) présentant au moins un élément d'accouplement (1506) destiné à s'interconnecter avec une structure homologue associée audit second composant optique (1620), ledit élément d'accouplement (1506) étant disposé à une certaine distance de ladite seconde lentille (1503) de telle sorte que, quand ledit élément d'accouplement (1506) s'engrène avec ladite structure homologue, ladite seconde lentille (1503) soit optiquement couplée audit composant optique (1620) par alignement passif.

**7.** Interconnexion selon la revendication 6, dans laquelle ledit second composant optique (1620) est un composant actif.

**8.** Interconnexion selon la revendication 7, dans laquelle ledit second component (1620) comprend un laser ou une photodiode.

**9.** Interconnexion selon la revendication 8, dans laquelle ledit second composant optique (1620) comprend un laser VCSEL.

**FIG. 1**

**FIG. 2**

**FIG. 3**

**FIG. 4**

**FIG. 5**

**FIG. 6**

701

702

702a

770

771

772a

772

704

704a

771a

**FIG. 7**

## Error of Simulation [Zemax]

Standard Deviation

2.000
1.800
1.600
1.400
1.200
1.000
0.800
0.600
0.400
0.200
0.000

0    12500   25000   37500   50000   62500   75000   87500   100000

**nr of rays per run**

**FIG. 8**

**FIG. 9A**

**FIG. 9B**

## Alignment Sensitivity TX
### Coupling Loss (dB)

Chip Displacement TX [mm]

—◇— Sample 1 TX  —⊠— Discretes TX
—△— Sample 2 TX  —⊗— IGES Rev.0 TX
—○— Sample 3 TX  —⊘— IGES Rev.A TX

## Alignment Sensitivity RX
### Coupling Loss (dB)

Chip Displacement RX [mm]

—◇— Sample 1 RX  —◈— Discretes RX
—△— Sample 2 RX  —◈— IGES Rev.0 RX
—□— Sample 3 RX  —◈— IGES Rev.A RX

## FIG. 11

**FIG. 10**

**Coupling Loss vs. Endface Preparation Method (dB)**

**FIG. 12**

**FIG. 13A**

**FIG. 14A**

**FIG. 13B**

**FIG. 14B**

**FIG. 13C**

**FIG. 14C**

**FIG. 15**

**FIG. 15a**

**FIG. 16**

EP 2 116 879 B1

**EP 2 116 879 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5515468 A
- US 6913400 B
- US 6956995 B1